# EUROPÄISCHE PATENTSCHRIFT

(11) **EP 3 237 247 B1**
(45) Veröffentlichungstag und Bekanntmachung des Hinweises auf die Patenterteilung: **17.07.2019**
(21) Anmeldenummer: 15778268.1
(22) Anmeldetag: 07.10.2015
(51) Int. Cl.: B60K 35/00, B60K 37/04, B60K 37/06

(54) **INFOTAINMENTSYSTEM, FORTBEWEGUNGSMITTEL UND VORRICHTUNG ZUR BEDIENUNG EINES INFOTAINMENTSYSTEMS EINES FORTBEWEGUNGSMITTELS**
INFOTAINMENT SYSTEM, MEANS OF TRANSPORTATION, AND DEVICE FOR OPERATING AN INFOTAINMENT SYSTEM OF A MEANS OF TRANSPORTATION
SYSTÈME D'INFODIVERTISSEMENT, MOYEN DE LOCOMOTION ET DISPOSITIF POUR LA MISE EN OEUVRE D'UN SYSTÈME D'INFODIVERTISSEMENT D'UN MOYEN DE LOCOMOTION

(30) Priorität: 22.12.2014 DE 102014226760
(43) Veröffentlichungstag der Anmeldung: 01.11.2017
(73) Patentinhaber: Volkswagen Aktiengesellschaft, 38440 Wolfsburg (DE)
(72) Erfinder: WILD, Holger, 10179 Berlin (DE); KÖTTER, Nils, 38118 Braunschweig (DE)
(86) Internationale Anmeldenummer: PCT/EP2015/073122
(87) Internationale Veröffentlichungsnummer: WO 2016/102091

(56) Entgegenhaltungen:
- DE-A1-102009 018 955
- US-A1- 2009 273 575
- US-A1- 2010 020 022

## Beschreibung

### Stand der Technik

Die vorliegende Erfindung betrifft ein Fortbewegungsmittel, ein Infotainmentsystem sowie eine Vorrichtung zur Bedienung eines Infotainmentsystems eines Fortbewegungsmittels. Insbesondere betrifft die vorliegende Erfindung eine Möglichkeit zur Eingabe stufenloser Eingabewerte mittels Wischgesten, ohne dass der Anwender zur Vornahme gezielter Eingaben seinen Blick auf die Anwenderschnittstelle richten muss.

Der Trend in den Cockpits aktueller Fortbewegungsmittel, insbesondere Kraftfahrzeuge, geht derzeit zu einem schalterlosen Design. Da hierbei auch auf herkömmliche Dreh-Drück-Steller verzichtet werden soll, wodurch kein wesentliches haptisches Feedback auf Anwendereingaben folgt, besteht der Bedarf an einer Anwenderschnittstelle und einem Eingabeelement, welches sich gut in die Optik eines schalterlosen Cockpits integriert und dem Kunden dennoch eine gute Orientierung sowie eine optische Rückmeldung beim Einstellen wichtiger Funktionen (wie z.B. Audio-Lautstärke, Scrollen in langen Listen, Klimabedienung, etc.) gibt.

DE 10 2012 008 681 A1 offenbart eine Multifunktionsbedieneinrichtung für ein Kraftfahrzeug, bei welchem eine kombinierte Slider-/Tastfläche zur Entgegennahme von Wischgesten und Druckeingaben vorgesehen ist. Das Bedienelement ist länglich oder rechteckig ausgeführt, wobei ein erhabener Randvorsprung einer Führung des Fingers des Anwenders dient. Vorzugsweise ist das Bedienelement seitlich der Bildschirmanzeige im Wesentlichen vertikal angeordnet.

DE 10 2013 000 110 A1 offenbart ein Bedienverfahren und ein Bediensystem in einem Fahrzeug, bei welchem im Ansprechen auf eine Berührung einer berührungsempfindlichen Oberfläche auf einer zweiten Anzeigefläche auf einer ersten Anzeigefläche angezeigte Schaltflächen derart verändert werden, dass auf der ersten Anzeigefläche zu der Schaltfläche gehörige Zusatzinformationen angezeigt werden. Hierzu wird eine berührungsempfindliche Oberfläche für eine kapazitive Wechselwirkung mit einem Betätigungsobjekt (z.B. ein kapazitiver Touch-Screen) vorgesehen.

DE 10 2008 048 825 A1 offenbart ein Anzeige- und Bediensystem in einem Kraftfahrzeug mit benutzeradaptiver Darstellung, wobei über eine Nutzereingabe ein Modifiziermodus aktivierbar ist, in dem eine grafische Darstellung aller Anzeigeobjekte zumindest teilweise in einem Teilbereich der Anzeigefläche erfolgt. Auf diese Weise können zuvor über eine gesamte Anzeigefläche verteilte Objekte in einem solchen Teilbereich angezeigt werden, welcher in einem Greifraum eines Anwenders befindlich ist.

Die DE 10 2009 018955 A1 betrifft ein Kraftfahrzeug mit einer Bedienanordnung zur Bedienung des Kraftfahrzeuges, wobei die Bedienanordnung ein Display zur Darstellung veränderlicher Informationen und einen über dem Display angeordneten transparenten Touchscreen umfasst. Hierbei ist über dem Touchscreen eine Maske angeordnet, die eine Aussparung aufweist, in der der Touchscreen von einem Bediener berührt werden kann und in der das unter dem Touchscreen liegende Display sichtbar ist. Ebenso ist in der US 2009/273575 A1 die Verwendung eines Touchscreens in einem Kraftfahrzeug beschrieben. Schließlich offenbart die US 2010/020022 A1 einen berührungsempfindlichen Eingabebildschirm mit einem visuellen Rückmeldesystem, wobei mittels einer Annäherungserfassungsvorrichtung eine visuelle Rückmeldung bereits vor dem Kontakt des Eingabeelements und der Berührung erfolgen kann.

Ausgehend vom vorstehend zitierten Stand der Technik ist es eine Aufgabe der vorliegenden Erfindung, eine komfortable Eingabeeinrichtung für Wischgesten optisch vorteilhaft in das Interieur eines Fortbewegungsmittels zu integrieren. Es ist eine weitere Aufgabe der vorliegenden Erfindung, Rückmeldungen an einen Anwender eines solchen Systems intuitiv verständlich zu gestalten.

### Offenbarung der Erfindung

Die vorstehend identifizierte Aufgabe wird erfindungsgemäß durch eine Vorrichtung zur Bedienung eines Infotainmentsystems eines Fortbewegungsmittels gelöst. Die Vorrichtung umfasst eine linien- oder kurvenförmige erstreckte Fingerleiste, welche zur haptischen (Längs-)Führung eines Fingers eines Anwenders eingerichtet ist. Mit anderen Worten wird eine eindimensionale Spur für den Finger des Anwenders vorgegeben. Eine solche Spur weist quer zu ihrer Längsrichtung insbesondere ein konkave und/oder eine konvexe (Teil-)Struktur auf, welche im Zuge einer Wischgeste von einem Anwender haptisch erfasst und zur Orientierung des Fingers auf der Fingerleiste verwendet werden kann. Zudem ist eine Erfassungseinheit zur Erfassung auf der Fingerleiste ausgeführter Wischgesten vorgesehen. Die Erfassungseinheit kann (beispielsweise kapazitiv) eine auf der Fingerleiste ausgeführte Bewegung menschlichen Gewebes erfassen und in elektrische Signale wandeln. Eine Auswerteeinheit ist zur Verarbeitung erfasster Wischgesten (bzw. durch diese erzeugter Signale) vorgesehen und kann in Form eines programmierbaren Prozessors, eines Mikrocontrollers, eines Nanocontrollers, o.ä., ausgeführt sein. Zudem weist die Vorrichtung einen linienförmigen Lichtauslass auf, welcher sich zumindest annähernd vollständig entlang der Fingerleiste erstreckt. Der Lichtauslass kann ein teilweise transparenter Kunststoff und/Glaskörper und/oder Sinterkörper sein, durch welchen ein hinter ihm liegendes Leuchtmittel Licht in Richtung des Anwenders ausschütten kann. Im Ansprechen auf eine mittels der Erfassungseinheit detektierte Anwendergeste kann die erfindungsgemäße Vorrichtung die Anwendergeste mittels eines aus dem Lichtauslass emittierten Lichtsignals quittieren. Beispielsweise kann eine gestartete Funktion durch ein der Funktion zugeordnetes Lichtmuster quittiert werden. Das Lichtmuster kann auch eine oder mehrere Farben aufweisen, welche der jeweils gestarteten Funktion eindeutig zugeordnet sind. Auch unabhängig von einem erfolgreichen Start einer der Geste zugeordneten Funktion kann die Betätigung der Vorrichtung durch eine Ausgabe eines entsprechenden Lichtsignals quittiert werden. Insbesondere im Falle einer Wischgeste kann ein Schimmer (auch "Glow" oder "Corona") um den oder die Finger erzeugt werden, der sich mit dem Finger bewegt, wodurch der Anwender darüber in Kenntnis gesetzt wird, in welcher Weise die Vorrichtung seine Geste erfasst hat. Als Anwendergeste kann auch bereits ein Annähern bzw. ein Auflegen eines Fingers oder mehrerer Finger verstanden werden, wobei ein Lauflicht oder mehrere Lauflichter den Lichtauslass (z.B. startend an dessen Rand oder an dessen Rändern) entlang in Richtung des Fingers oder der Finger erzeugt wird, so dass auch ungeübte Anwender ein intuitiv verständliches Signal darüber erhalten, dass sie soeben eine Eingabeschnittstelle gefunden bzw. verwendet haben.

Die Unteransprüche zeigen bevorzugte Weiterbildungen der Erfindung.

Die Fingerleiste kann beispielsweise zur horizontalen Anordnung vorgesehen sein. Dies hat den Vorteil, dass in vertikaler Richtung ein Sims bzw. eine Auflage für einen Finger ausgebildet wird, wodurch in vertikaler Richtung entstehende Beschleunigungen (z.B. beim Durchfahren einer Bodenwelle oder eines Schlaglochs) den Finger des Anwenders nicht aus einem beabsichtigten Raumbereich vor der Fingerleiste bewegen. Besonders intuitiv wird die Bedienung der Vorrichtung, wenn die Fingerleiste oberhalb und/oder unterhalb einer Anzeigefläche in einem Fortbewegungsmittel angeordnet wird. Auf diese Weise steht die Vorrichtung bzw. die erfindungsgemäß vorgesehene Fingerleiste in einem starken Kontext der Anzeigeflächen und wird intuitiv als Bestandteil einer Anwenderschnittstelle verstanden. Eine besonders angenehme und selbsterklärende Haptik ergibt sich bei Ausgestaltung der Fingerleiste in Form einer rinnen- oder muldenförmigen Längsnut, welche beispielsweise einer Oberfläche eines (ebenen oder gewölbten) Bildschirms folgt.

Bevorzugt ist der Lichtauslass in die Fingerleiste eingelassen, wodurch das emittierte Lichtsignal besonders stark mit der Anwendergeste assoziiert wird. Mit anderen Worten wird bei einer erfindungsgemäßen Bedienung der Fingerleiste auch der Lichtauslass überstrichen, so dass das quittierende Lichtsignal in unmittelbarer Nähe und insbesondere auch unter dem jeweiligen Finger des Anwenders angeordnet zu sein scheint.

Eine geeignete Möglichkeit zur Realisierung der quittierenden Lichtsignale besteht darin, hinter dem Lichtauslass eine Lichtquelle anzuordnen, welche einzelne Leuchtmittel (z.B. lichtimitierende Dioden, LEDs) umfasst, welche eine besonders schnelle Ansprechgeschwindigkeit bezüglich sie ansteuernder elektrischer Signale aufweisen. Dies ermöglicht eine besonders präzise Ausgabe, die Anwendergeste quittierender Lichtsignale. Insbesondere kann ein transluzentes (umgangssprachlich auch "milchig") Element zur Homogenisierung vom Lichtauslass ausgeschütteten Lichtes vorgesehen sein. Auf diese Weise sorgt das transluzente Element für eine Diffusion des eingestrahlten Lichtes in Richtung des Anwenders, wodurch einerseits die inhomogene Lichtquelle optisch attraktiver in Erscheinung tritt und dennoch eine präzise Positionierung des Lichtsignals möglich ist.

Die Vielfalt möglicher Eingaben wird dem Anwender besonders ersichtlich dadurch, dass die Fingerleiste beidseitig durch optisch und/oder haptisch abgegrenzte Endbereiche zur Ausbildung von Tastenfeldern begrenzt ist. Beispielsweise können Stege quer zur Längserstreckung der Fingerleiste vorgesehen sein, welche der Anwender deutlich fühlen kann. Alternativ oder zusätzlich können quer zur Längsrichtung der Fingerleiste erstreckte Nuten vorgesehen sein, einen Wischbereich zwischen den Endbereichen optisch und haptisch gegenüber den Tastenfeldern abzugrenzen. Auch eine Bedienung der Tastenfelder kann auf diese Weise im Wesentlichen ohne ein optisches Erfassen der Vorrichtung durch den Anwender erfolgen. Dies erhöht die Verkehrssicherheit während der Bedienung der erfindungsgemäßen Vorrichtung. Beispielsweise können wiederholende Tipp-Eingaben bezüglich eines der Tastenfelder verwendet werden, um eine dem Wischbereich zugeordnete Funktion zu wechseln (englisch: "toggling"). Mögliche Funktionen, welche mittels der Tastenfelder "durchgeschaltet" werden können, werden im weiteren Verlauf der vorliegenden Beschreibung erläutert. Beispielsweise kann eine für den Wischbereich gewählte Funktion mittels einer Langdruck(englisch: "longpress")-Geste auch für zukünftige Bedienschritte dem Wischbereich zugeordnet werden. Auf diese Weise kann eine dauerhafte Zuordnung einer vom Anwender gewünschten Funktion zum Wischbereich erfolgen.

Der Lichtauslass kann bevorzugt eingerichtet sein, im Bereich der Tastenfelder unabhängig von einer aktuellen Lichtfarbe in sämtlichen anderen Bereichen der Fingerleiste eine vordefinierte andere Lichtfarbe auszugeben. Entsprechendes gilt für eine Lichtintensität. Mit anderen Worten sind die Bereiche des Lichtauslasses in den Endbereichen bevorzugt optisch undurchlässig gegenüber dem Wischgestenbereich der Fingerleiste abgegrenzt. Beispielsweise können drei transluzente Komponenten des Lichtauslasses im Bereich der optischen und/oder haptischen Abgrenzung durch zwei opake (also optisch "undurchlässige") Strukturen unterbrochen werden. Beispielsweise können diese optischen Unterbrechungen aus einer Oberfläche der Fingerleiste derart hervorstehen, dass sie für eine haptische Begrenzung der Endbereiche sorgen. Bevorzugt wird ein optisches Übersprechen von Licht zumindest vermieden, indem die opaken Strukturen in Richtung des Anwenders nicht von transluzenten Elementen überlagert sind. Eine besonders homogene Oberfläche kann indes erreicht werden, indem ein vollständig transparentes Element die Oberfläche der Fingerleiste bildet.

Die Erfassungseinheit kann eine lineare Anordnung einer Vielzahl kapazitiver Antennen aufweisen, welche in Haupterstreckungsrichtung (Längsrichtung) der Fingerleiste in einem Bereich hinter der Fingerleiste nebeneinander angeordnet sind. Mit anderen Worten folgen die einzelnen kapazitiven Antennen der Linienform der Fingerleiste, so dass besonders viele unterschiedliche Eingabepositionen auf der Fingerleiste von der Erfassungseinheit aufgelöst und der Auswerteeinheit gemeldet werden können. Gegenüber kapazitiven Oberflächen berührungsempfindlicher Bildschirme bieten die einzelnen kapazitiven Antennen den Vorteil einer flexibleren Auslegbarkeit hinsichtlich Empfindlichkeit und Reichweite. Beispielsweise kann die Erfassungseinheit nicht lediglich Berührungen, sondern auch Annäherungen eines Anwenders ohne Kontakt mit der Fingerleiste erfassen und der Auswerteeinheit melden.

Beispielsweise kann die erfindungsgemäße Vorrichtung eine Anzeigeeinheit mit einer berührungsempfindlichen Oberfläche und eine linien- oder kurvenförmig erstreckte haptische Barriere auf der Anzeigeeinheit aufweisen. Die Barriere dient zur Abgrenzung einer Anzeigefläche der Anzeigeeinheit gegenüber einem zur Ausgestaltung einer erfindungsgemäßen Fingerleiste vorgesehenen Randbereich der Anzeigeeinheit. Ein im Bereich der Fingerleiste angeordnetes Segment der berührungsempfindlichen Oberfläche der Anzeigeeinheit dient also als Erfassungseinheit zur Erfassung von Druck-/Tipp- und Wischgesten eines Anwenders. Entsprechend kann ein im Bereich der Fingerleiste angeordnetes Segment der Anzeigeeinheit den Lichtauslass der Vorrichtung bilden. Mit anderen Worten ist der Lichtauslass als linienförmiges Segment einer selbstleuchtenden Anzeigeeinheit ausgestaltet. Durch die haptische Barriere kann die Anzeigeeinheit einerseits die Anzeigefläche und andererseits die Erfassungseinheit und den Lichtauslass der erfindungsgemäßen Vorrichtung bereitstellen, obwohl die Anzeigeeinheit als einstückiges Element gefertigt werden kann. Dies erhöht die Stabilität der Vorrichtung, senkt die Bauteilanzahl, erübrigt Montagevorgänge und senkt Kosten für die Produktion. Überdies vermeiden einstückige Komponenten im Fahrzeugbau Probleme des Knarzens, Klapperns und unerwünschten Schmutzeintrages, wodurch Fehlfunktionen vorgebeugt wird.

Bevorzugt kann weiter eine Annäherungssensorik vorgesehen sein, wobei die Auswerteeinheit eingerichtet ist, eine mittels der Annäherungssensorik erfasste Geste mittels eines aus dem Lichtauslass emittierten Lichtsignals zu quittieren. Mit anderen Worten wird nicht erst eine berührende Interaktion des Anwenders mit der Fingerleiste erfindungsgemäß quittiert, sondern ein Lichtsignal bereits im Ansprechen auf eine Annäherung des Anwenders an die Fingerleiste ausgegeben, um den Anwender darüber in Kenntnis zu setzen, dass die Möglichkeit einer berührenden Eingabe mit der erfindungsgemäßen Vorrichtung besteht und wie eine solche Interaktion aussehen könnte. Dies kann beispielsweise durch Lichtverläufe und/oder Blinkmuster erfolgen, wodurch der Anwender zur Eingabe von Wisch- bzw. Multitouch-Gesten animiert wird.

Bevorzugt ist die Auswerteeinheit eingerichtet, eine erste vordefinierte Geste auf der Fingerleiste zur Anpassung einer Lautstärke einer Medienwiedergabe auszuwerten. Die erste Geste kann beispielsweise eine Wischgeste mit einem einzelnen Finger sein. Alternativ oder zusätzlich ist die Auswerteeinheit eingerichtet, eine zweite vordefinierte Geste auf der Fingerleiste zur Anpassung einer Lautstärke einer Sprachausgabe des Infotainmentsystems auszuwerten. Die zweite Geste kann beispielsweise eine Wischgeste mit genau zwei Fingern (Mehrfachberührungsgeste, Multitouch-Geste) sein. Alternativ oder zusätzlich kann die Auswerteeinheit eingerichtet sein, eine dritte vordefinierte Geste auf der Fingerleiste zur Anpassung einer Lautstärke von Klangzeichen bzw. akustischen Warntönen auszuwerten. Die dritte Geste kann beispielsweise eine mit genau drei Fingern ausgeführte Multitouch-Wischgeste sein. Eine Zuordnung zwischen den vorstehend genannten Gesten und beispielhaften Funktionsumfängen kann in beliebiger Weise abgeändert werden, ohne den Bereich der vorliegenden Erfindung zu verlassen.

Je nach dem, welche Art von Geste bzw. welche Art durch die Geste gestarteter Funktion vorliegt, kann ein jeweiliger Hinweistext und/oder ein jeweiliges Hinweissymbol auf einer Anzeigeeinheit der Vorrichtung ausgegeben werden.

Alternativ oder zusätzlich kann ein über den Lichtauslass ausgegebenes Lichtsignal die Funktion und die Art der erfassten Geste unabhängig voneinander quittieren. Beispielsweise kann die Art der Geste durch eine Position bzw. mehrere Positionen erhöhter Lichtintensität veranschaulicht bzw. quittiert werden. Durch die Verwendung unterschiedlicher Farben können die bedienten Funktionen veranschaulicht werden. Beispielsweise kann bei einer Wischgestenbedienung einer Klimafunktion das Lichtsignal in Abhängigkeit einer Verringerung oder Erhöhung einer Solltemperatur in Richtung blau bzw. in Richtung rot verändert werden. Sofern die Funktion eine Lautstärkeveränderung ist, kann von einem weißen Licht in Richtung roten Lichts gewechselt werden, wenn die Lautstärke erhöht wird bzw. anders herum von einer roten Lichtfarbe zu weißem Licht gewechselt werden, wenn die Lautstärke verringert wird. Selbstverständlich kann der Lichtauslass annähernd vollständig mit Licht einer ersten Farbe beaufschlagt werden, um die Art und Weise der Funktionsanpassung zu veranschaulichen, während eine zweite Farbe für im Bereich der Finger des Anwenders ausgeschütteten Lichts gewählt wird, wodurch die erfasste Geste (z.B. unabhängig von einer angepassten Funktion) quittiert wird.

Die Auswerteeinheit kann weiter eingerichtet sein, im Ansprechen auf ein Verstreichen einer vordefinierten Zeitdauer nach einem Ende einer mittels der Erfassungseinheit erfassten Geste ein aus dem Lichtauslass emittiertes Lichtsignal einer aktuellen Einstellung des Ambientelichtes des Fortbewegungsmittels anzupassen. Mit anderen Worten kann der Lichtauslass sowie das hinter ihm angeordnete Leuchtmittel dazu verwendet werden, ein Ambientelichtkonzept zu unterstützen, sofern die erfindungsgemäße Fingerleiste akut nicht zur Entgegennahme von Anwendergesten bzw. zu deren Quittierung verwendet wird. Die vordefinierte Zeitdauer, nach welcher im Nachgang einer Anwenderinteraktion automatisch zum Ambientelichtmodus umgeschaltet wird, kann beispielsweise eine Mindestzeitdauer in Form ganzzahliger Vielfache einer Sekunde im Bereich zwischen einer Sekunde und 10 Sekunden sein. Auf diese Weise wird die erfindungsgemäße Vorrichtung noch vielfältiger zur optisch ansprechenden und intuitiv sowie komfortabel zu bedienenden Innenraumgestaltung genutzt.

Gemäß einem zweiten Aspekt der vorliegenden Erfindung wird ein Infotainmentsystem für ein Fortbewegungsmittel vorgeschlagen, welches eine Vorrichtung gemäß dem erstgenannten Erfindungsaspekt umfasst. Mit anderen Worten ist die erfindungsgemäße Vorrichtung in einer Ausgestaltung um Funktionsumfänge wie beispielsweise eine Musikwiedergabe und/oder eine Navigationsfunktion ergänzt. Entsprechend können auch Heiz-/Klimaumfänge über die erfindungsgemäße Vorrichtung angepasst und veranschaulicht werden. Die Merkmale, Merkmalskombinationen und die sich aus diesen ergebenden Vorteile entsprechen dem erstgenannten Aspekt der vorliegenden Erfindung, so dass zur Vermeidung von Wiederholungen auf die obigen Ausführungen verwiesen wird.

Gemäß einem dritten Aspekt der vorliegenden Erfindung wird ein Fortbewegungsmittel mit einem Infotainmentsystem entsprechend dem zweitgenannten Erfindungsaspekt oder einer Vorrichtung gemäß dem erstgenannten Erfindungsaspekt vorgeschlagen. Das Fortbewegungsmittel kann beispielsweise ein PKW, ein Transporter, ein LKW, ein Motorrad, ein Luft- und/oder Wasserfahrzeug sein. Auch bezüglich der Merkmale, Merkmalskombinationen und der sich aus diesen ergebenden Vorteilen des erfindungsgemäßen Fortbewegungsmittels wird zur Vermeidung von Wiederholungen auf die obigen Ausführungen verwiesen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels eines erfindungsgemäßen Fortbewegungsmittels mit einem Ausführungsbeispiel einer erfindungsgemäßen Vorrichtung;
- Figur 2: eine perspektivische Zeichnung eines Ausführungsbeispiels einer erfindungsgemäßen Vorrichtung;
- Figur 3: eine Detailansicht eines Ausschnittes des in Figur 2 gezeigten Ausführungsbeispiels;
- Figur 4: eine Draufsicht auf ein Ausführungsbeispiel einer erfindungsgemäß verwendeten Erfassungseinheit mit einer Vielzahl kapazitiver Antennen; und
- Figur 5: eine Prinzipskizze, veranschaulichend ein Ausführungsbeispiel einer erfindungsgemäßen Vorrichtung, bei welchem eine Anzeigeeinheit mit berührungsempfindlicher Oberfläche eine Anzeigefläche, eine Erfassungseinheit und einen Lichtauslass einer erfindungsgemäßen Vorrichtung bereitstellt.

### Ausführungsformen der Erfindung

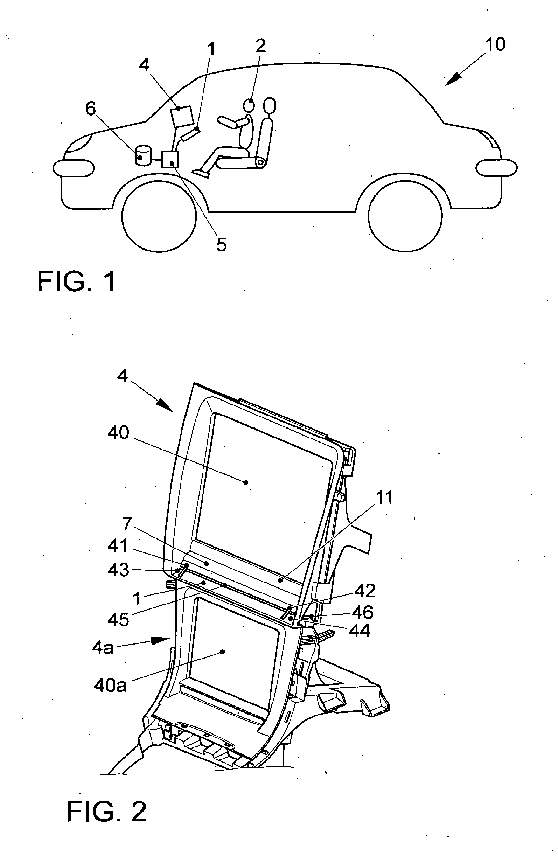

Figur 1 zeigt einen PKW 10 als Fortbewegungsmittel, in welchem ein Bildschirm 4 als Anzeigeeinheit informationstechnisch mit einem elektronischen Steuergerät 5 als Auswerteeinheit verbunden ist. Eine horizontal unterhalb des Bildschirms 4 angeordnete Fingerleiste 1 ist zur Erfassung von Anwendergesten sowie zur optischen Quittierung derselben mittels Lichtsignalen informationstechnisch mit dem elektronischen Steuergerät 5 verbunden. Ein Datenspeicher 6 hält vordefinierte Referenzen zur Klassifikation der Anwendergesten bereit und dient der Definition den klassifizierten Anwendergesten zugeordneter Lichtsignalmuster. Ein Anwender 2 streckt seinen Arm im Wesentlichen horizontal aus, um eine Wischgeste auf der Fingerleiste 1 vorzunehmen. Vertikalbeschleunigungen des PKWs 10 würden ohne eine erfindungsgemäße Ausgestaltung der Fingerleiste 1 dazu führen, dass der Anwender die Fingerleiste 1 mitunter verfehlt. Zudem müsste der Anwender 2 sein Augenmerk auf die Fingerleiste 1 richten, um seinen Finger sauber auf derselben zu positionieren. Erfindungsgemäß können diese Vorgänge unterbleiben, da die Fingerleiste 1 eine vorteilhafte simsartige Struktur zur Führung des Fingers des Anwenders 2 aufweist.

Figur 2 zeigt ein Ausführungsbeispiel einer erfindungsgemäßen Vorrichtung mit zwei Bildschirmen 4, 4a, welche im Wesentlichen übereinander zur Anordnung in einer Mittelkonsole bzw. einem Armaturenbrett eines Fortbewegungsmittels vorgesehen sind. Die Anzeigeflächen 40, 40a der Bildschirme 4, 4a sind von oben nach unten der Reihe nach durch einen stegförmigen Rahmenteil 11 als haptische Barriere, eine Infrarot-LED-Leiste 7 als Annäherungssensorik und eine konkav ausgeführte Fingerleiste 1 getrennt, in welche ein linienförmiger Lichtauslass 45 eingelassen ist, welcher der Längserstreckungsrichtung der Fingerleiste 1 folgt. Distale Bereiche 43, 44 der Fingerleiste 1 sind durch senkrecht zur Längserstreckungsrichtung orientierte Stegstrukturen 41, 42 gegenüber einem mittleren Wischgestenbereich der Fingerleiste 1 als Schaltflächen abgegrenzt bzw. kenntlich gemacht. An den linienförmigen Lichtauslass 45 grenzt ein sich im Wesentlichen in Fahrtrichtung erstreckender Lichtleiter 46, welcher aus Fahrtrichtung stammendes Licht zur Erzeugung quittierender Lichtsignale in Richtung des Anwenders leitet.

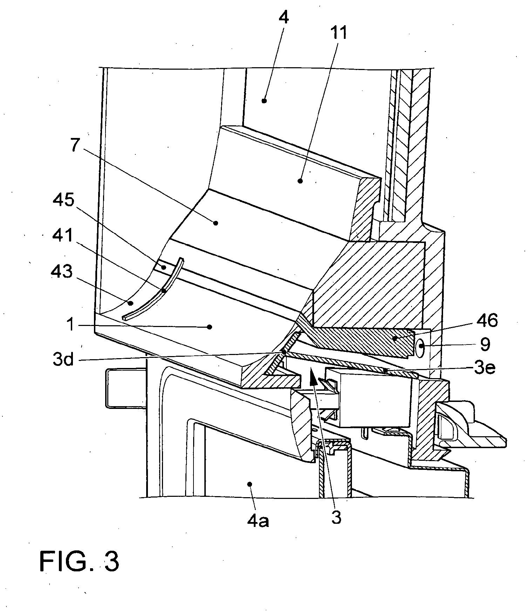

Figur 3 zeigt eine Detailansicht des in Figur 2 dargestellten Ausführungsbeispiels einer erfindungsgemäßen Vorrichtung. In dieser Ansicht ist exemplarisch eine LED 9 als Leuchtmittel einer Lichtquelle in Fahrtrichtung am Lichtleiter 46 vorgesehen, durch welche ein schmaler, jedoch diffus bzw. unscharf begrenzter Bereich des Lichtaustritts 45 im Licht der LED 9 erstrahlt. Kurz unterhalb der Oberfläche der Fingerleiste 1 ist ein Träger 3d einer kapazitiven Erfassungseinheit 3 angeordnet, welcher mit einer Platine 3e mechanisch und elektrisch verbunden ist. Die Platine 3e trägt (nicht dargestellte) elektronische Bauelemente zum Betrieb der Erfassungseinheit 3.

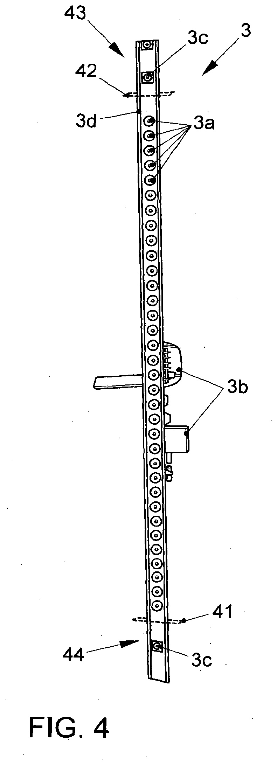

Figur 4 zeigt ein Ausführungsbeispiel einer Erfassungseinheit 3, wie sie in Figur 3 vorgestellt worden ist. In der Draufsicht nach Figur 4 sind linienförmig nebeneinander angeordnete kapazitive Antennen 3a auf dem Träger 3d zu erkennen, welche jeweils eine kreisscheibenförmige Gestalt aufweisen und äquidistant zueinander angeordnet sind. Durch gestrichelt dargestellte Stege 41, 42 werden Endbereiche 43, 44 gekennzeichnet, welche jeweils eine quadratisch ausgeführte kapazitive Antenne 3c zur Entgegennahme von Druck- und/oder Tipp- und/oder Long-Press-Gesten aufweisen. Elektronische Bauelemente 3b sind auf der Platine (Bezugszeichen 3e) in Figur 3 angeordnet und für den Betrieb der Antennen 3a, 3c vorgesehen.

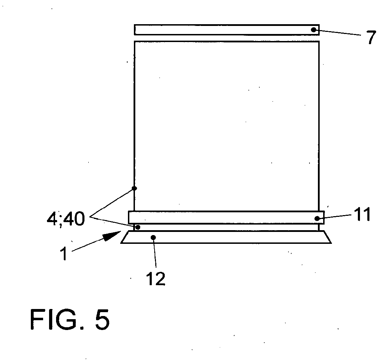

Figur 5 zeigt eine Prinzipskizze eines alternativen Ausführungsbeispiels einer erfindungsgemäßen Vorrichtung zur Bedienung eines Infotainmentsystems. Oberhalb eines Bildschirms 4 mit einer Anzeigefläche 40 ist eine Annäherungssensorik 7 zur Erkennung einer Annäherung einer Hand eines Anwenders an die Vorrichtung vorgesehen. Ein im Wesentlichen horizontal erstreckter Steg 11 auf dem Bildschirm 4 begrenzt einen schmalen Oberflächenbereich der Anzeigefläche 40, welcher einer erfindungsgemäßen Fingerleiste 1 zugeordnet ist, von einem Hauptanzeigebereich der Anzeigefläche 40. Der Bildschirm 4 ist als Touch-Screen (englisch für: "berührungsempfindliche Anzeigeeinheit") ausgestaltet, wie er im Stand der Technik bekannt ist. Zur Realisierung einer erfindungsgemäßen Vorrichtung wird jedoch ein oberhalb des Steges 11 angeordneter Anzeigebereich 40 gänzlich anders angesteuert als ein unterhalb des Steges 11 angeordneter Bereich, welcher die Erfassungseinheit und den Lichtauslass der Vorrichtung bildet. Mit anderen Worten ist ein einstückiger Bildschirm 4 in Form eines Touch-Screens vorgesehen, dessen unterer Rand die Erfassungseinheit und den Lichtauslass der erfindungsgemäßen Vorrichtung bildet. Nach unten abgegrenzt wird die Fingerleiste 1 durch einen im Wesentlichen horizontalen Sims 12 zur Auflage eines Fingers und dessen Führung beim Ausführen einer Wischgeste.

### Bezugszeichenliste

- 1: Fingerleiste
- 2: Anwender
- 3: Erfassungseinheit
- 3a: kapazitive Antennen
- 3b: elektronische Bauteile
- 3c: kapazitive Antennen (Tastbereich)
- 3d: Träger
- 3e: Platine der Erfassungseinheit
- 4, 4a: Bildschirm
- 5: elektronisches Steuergerät
- 6: Datenspeicher
- 7: Annäherungssensorik
- 9: LED
- 10: PKW
- 11: Steg/Rahmenteil
- 12: Sims
- 40, 4a: Anzeigefläche
- 41, 42: haptische Grenzen
- 43, 44: Endbereiche
- 45: Lichtauslass
- 46: Lichtleiter

## Patentansprüche

1. Vorrichtung zur Bedienung eines Infotainmentsystems eines Fortbewegungsmittels (10) umfassend:
- eine Linien- oder kurvenförmig erstreckte Fingerleiste (1) zur haptischen Führung eines Fingers eines Anwenders (2),
- eine Erfassungseinheit (3) zur Erfassung auf der Fingerleiste (1) ausgeführter Wischgesten,
- eine Auswerteeinheit (5) zur Verarbeitung erfasster Wischgesten, und
- einen linienförmigen Lichtauslass (45), welcher sich zumindest annähernd vollständig entlang der Fingerleiste (1) erstreckt,
wobei die Vorrichtung eingerichtet ist, im Ansprechen auf eine mittels der Erfassungseinheit (3) detektierte Anwendergeste die Anwendergeste mittels eines aus dem Lichtauslass (45) emittierten Lichtsignals zu quittieren,
**dadurch gekennzeichnet, dass**
die Fingerleiste (1) beidseitig durch optisch und/oder haptisch abgegrenzte Endbereiche (43,44) zur Ausbildung von Tastenfeldern begrenzt ist.

2. Vorrichtung nach Anspruch 1, wobei die Fingerleiste (1) eine rinnenförmige Oberfläche zur Führung des Fingers aufweist, und beidseitig quer zur Längsrichtung der Fingerleiste erstreckte Stege oder Nuten vorgesehen sind, um einen Wischbereich optisch und/oder haptisch gegenüber den Tastenfeldern abzugrenzen.

3. Vorrichtung nach Anspruch 1 oder 2, wobei die Fingerleiste (1)
- zur horizontalen Anordnung, insbesondere ober- und/oder unterhalb einer Anzeigefläche (40, 40a), im Fortbewegungsmittel (10) eingerichtet ist, und/oder
- ein Sims (12) zur Auflage eines Fingers aufweist.

4. Vorrichtung nach einem der vorstehenden Ansprüche, wobei der Lichtauslass (45) in die Fingerleiste (1) eingelassen ist.

5. Vorrichtung nach einem der vorstehenden Ansprüche, wobei eine Lichtquelle (9) hinter dem Lichtauslass (45) angeordnet ist, welche
- einzelne Leuchtmittel, bevorzugt LEDs umfasst, wobei insbesondere
- ein transluzentes Element zur Homogenisierung vom Lichtauslass (45) ausgeschütteten Lichtes vorgesehen ist.

6. Vorrichtung nach Anspruch 5, wobei der Lichtauslass (45) eingerichtet ist, im Bereich der Tastenfelder unabhängig von einer Lichtfarbe in sämtlichen anderen Bereichen der Fingerleiste eine vordefinierte andere Lichtfarbe auszugeben.

7. Vorrichtung nach einem der vorstehenden Ansprüche, wobei
- die Erfassungseinheit (3) eine lineare Anordnung einer Vielzahl kapazitiver Antennen (3a) aufweist, welche in Haupterstreckungsrichtung der Fingerleiste (1) hinter der Fingerleiste (1) nebeneinander angeordnet sind.

8. Vorrichtung nach einem der vorstehenden Ansprüche 1 bis 5 weiter umfassend
- eine Anzeigeeinheit (4) mit einer berührungsempfindlichen Oberfläche und
- eine Linien- oder kurvenförmig erstreckte haptische Barriere (11) auf der Anzeigeeinheit (4) zur Abgrenzung einer Anzeigefläche (40) gegenüber der Fingerleiste (1), wobei
- ein im Bereich der Fingerleiste (1) angeordnetes Segment der berührungsempfindlichen Oberfläche die Erfassungseinheit (3) der Vorrichtung bildet, und
- ein im Bereich der Fingerleiste (1) angeordnetes Segment der Anzeigeeinheit (4) den Lichtauslass (45) der Vorrichtung bildet.

9. Vorrichtung nach einem der vorstehenden Ansprüche weiter umfassend eine Annäherungssensorik (7), wobei die Auswerteeinheit (5) eingerichtet ist, eine mittels der Annäherungssensorik (7) erfasste Geste mittels eines aus dem Lichtauslass (45) emittierten Lichtsignals zu quittieren.

10. Vorrichtung nach einem der vorstehenden Ansprüche, wobei die Auswerteeinheit (5) eingerichtet ist,
- eine erste Geste auf der Fingerleiste (1) zur Anpassung einer Lautstärke einer Medienwiedergabe und/oder
- eine zweite Geste auf der Fingerleiste (1) zur Anpassung einer Lautstärke einer Sprachausgabe des Infotainmentsystems und/oder
- eine dritte Geste auf der Fingerleiste (1) zur Anpassung einer Lautstärke von Klangzeichen
auszuwerten.

11. Vorrichtung nach Anspruch 10, wobei die Auswerteeinheit (5) eingerichtet ist, eine ausgewertete erste Geste und/oder zweite Geste und/oder dritte Geste eines Anwenders durch eine optische Ausgabe eines ersten bzw. zweiten bzw. dritten Hinweistextes und/oder eines Hinweissymbols auf einer Anzeigeeinheit (4) zu quittieren.

12. Vorrichtung nach einem der vorstehenden Ansprüche, wobei die Fingerleiste eingerichtet ist, Mehrfachberührungsgesten aufzulösen, und die Auswerteeinheit (5) eingerichtet ist,
- eine Geste mit genau einem Finger mit einem ersten Lichtsignal zu quittieren
- eine Mehrfachberührungsgeste mit genau zwei Fingern mit einem zweiten Lichtsignal zu quittieren und insbesondere
- eine Mehrfachberührungsgeste mit genau drei Fingern mit einem dritten Lichtsignal zu quittieren, welches jeweils aus dem Lichtauslass emittiert wird,
wobei insbesondere eine Position der Ausgabe des Lichtsignals mit der jeweiligen Geste bzw. Mehrfachberührungsgeste übereinstimmt.

13. Vorrichtung nach einem der vorstehenden Ansprüche, wobei die Auswerteeinheit (5) weiter eingerichtet ist, im Ansprechen auf ein Verstreichen einer vordefinierten Zeitdauer nach einem Ende einer mittels der Erfassungseinheit (3) erfassten Geste ein aus dem Lichtauslass (45) emittiertes Lichtsignal einer aktuellen Einstellung des Ambientelichtes des Fortbewegungsmittels (10) anzupassen.

14. Infotainmentsystem umfassend eine Vorrichtung nach einem der vorstehenden Ansprüche.

15. Fortbewegungsmittel umfassend ein Infotainmentsystem nach Anspruch 14 oder eine Vorrichtung nach einem der vorstehenden Ansprüche 1 bis 13.

## Claims

1. Apparatus for operating an infotainment system of a movement means (10) comprising:
- a line or curve shaped finger strip (1) for the haptic guidance of a finger of a user (2),
- a detection unit (3) for detecting swiping gestures effected on the finger strip (1),
- an evaluation unit (5) for processing detected swiping gestures, and
- a line-shaped light outlet (45) which extends at least approximately completely along the finger strip (1),
wherein the device is arranged to acknowledge the user gesture by means of a light signal emitted from the light outlet (45) in response to a user gesture detected by the detection unit (3),
**characterized in that**
the finger strip (1) is delimited on both sides by optically and/or haptically delimited end regions (43, 44) to form key fields.

2. Apparatus according to claim 1, wherein the finger strip (1) comprises a groove-shaped surface for guiding the finger, and with ridges or grooves extending on both sides transversely to the longitudinal direction of the finger strip to delimit a swiping area optically and/or haptically with respect to the key fields.

3. Apparatus according to claim 1 or 2, wherein the finger strip (1) is arranged in the horizontal arrangement in the movement means (10), in particular above and/or below a display surface (40, 40a), , and/or comprises a ledge (12) to support a finger.

4. Apparatus according to one of the preceding claims, wherein the light outlet (45) is embedded in the finger strip (1).

5. Apparatus according to one of the preceding claims, wherein a light source (9) is arranged behind the light outlet (45), which comprises
- individual light sources, preferably LEDs, wherein, in particular,
- a translucent element is provided for homogenization of the light emitted through the light outlet (45).

6. Apparatus according to claim 5, wherein the light outlet (45) is designed to output a predefined different light color in the area of the key fields, regardless of light colors in all other regions of the finger strip.

7. Apparatus according to one of the preceding claims, wherein the detection unit (3) has a linear arrangement of a plurality of capacitive antennas (3a) which are arranged side by side in the main extension direction of the finger strip (1) behind the finger strip (1).

8. Apparatus according to one of the preceding claims 1 to 5 further comprising
- a display unit (4) with a touch-sensitive surface, and
- a line or curved haptic barrier (11) on the display unit (4) for delimiting a display surface (40) relative to the finger strip (1), wherein
- a segment of the touch-sensitive surface arranged in the region of the finger strip (1) forms the detection unit (3) of the apparatus, and
- a segment arranged in the region of the finger strip (1) of the display unit (4) to form the light outlet (45) of the apparatus.

9. Apparatus according to one of the preceding claims further comprising a proximity sensor (7), wherein the evaluation unit (5) is designed to acknowledge a gesture detected by means of the proximity sensor (7) by means of a light signal emitted from the light outlet (45).

10. Apparatus according to one of the preceding claims, wherein the evaluation unit (5) is arranged to evaluate:
- a first gesture on the finger strip (1) for adjusting a volume of a media playback and/or
- a second gesture on the finger strip (1) for adjusting a volume of a voice output of the infotainment system, and/or
- a third gesture on the finger strip (1) for adjusting a volume of sound.

11. Apparatus according to claim 10, wherein the evaluation unit (5) is set up to acknowledge an evaluated first gesture and/or second gesture and/or third gesture of a user by an optical output of a first or second or third information text and/or a information symbol on a display unit (4).

12. Apparatus according to one of the preceding claims, wherein the finger strip is arranged to separate multiple touch gestures, while the evaluation unit (5) is arranged to acknowledge,
- a gesture with exactly one finger with a first light signal
- a multiple touch gesture with exactly two fingers with a second light signal and, in particular,
- a multiple touch gesture with exactly three fingers with a third light signal, which is emitted from the light outlet in each case,
wherein, in particular, a position of the output of the light signal coincides with the respective gesture or multiple touch gestures.

13. Apparatus according to one of the preceding claims, wherein the evaluation unit (5) is further configured, in response to the expiry of a predefined period of time after the end of a gesture detected by the detection unit (3), to adapt a light signal emitted from the light outlet (45) of a current adjustment of the ambient light of the movement means (10).

14. Infotainment system comprising a device according to one of the preceding claims.

15. Movement means comprising an infotainment system according to claim 14, or a device according to one of the preceding claims 1 to 13.

## Revendications

1. Dispositif de commande d'un système d'infotainment d'un moyen de transport (10), comprenant :
- une moulure (1) linéaire ou incurvée pour le guidage haptique d'un doigt d'un utilisateur (2),
- une unité de détection (3) pour la détection de gestes d'effleurement effectués sur la moulure (1),
- une unité d'analyse (5) pour le traitement de gestes d'effleurement et
- une sortie de lumière (45) linéaire, qui s'étend au moins approximativement entièrement le long de la moulure (1),
le dispositif étant conçu pour acquitter, en réaction à un geste d'utilisateur détecté au moyen de l'unité de détection (3), le geste de l'utilisateur au moyen d'un signal lumineux émis à partir de la sortie de lumière (45),
**caractérisé en ce que**
la moulure (1) est limitée des deux côtés par des zones d'extrémité (43, 44) délimitées de manière optique et/ou haptique pour la formation de claviers.

2. Dispositif selon la revendication 1, la moulure (1) comprenant une surface en forme de gouttière pour le guidage du doigt et des nervures ou des rainures transversales à la direction longitudinale de la moulure sont prévues, afin de délimiter une zone d'effleurement de manière optique et/ou haptique par rapport aux claviers.

3. Dispositif selon la revendication 1 ou 2, la moulure (1)
- étant conçue pour une disposition horizontale, plus particulièrement au-dessus et/ou en dessous d'une surface d'affichage (40, 40a) dans le moyen de transport (10) et/ou
- comprenant un rebord (12) pour l'appui d'un doigt.

4. Dispositif selon l'une des revendications précédentes, la sortie de lumière (45) étant intégrée dans la moulure (1).

5. Dispositif selon l'une des revendications précédentes, une source de lumière (9) étant disposée derrière la sortie de lumière (45), qui
- comprend différents moyens d'éclairage, de préférence des LED, plus particulièrement
- un élément translucide étant prévu pour l'homogénéisation de la lumière émise par la sortie de lumière (45).

6. Dispositif selon la revendication 5, la sortie de lumière (45) étant conçue pour émettre, au niveau des claviers, indépendamment d'une couleur de lumière dans toutes les autres zones de la moulure, une autre couleur de lumière prédéfinie.

7. Dispositif selon l'une des revendications précédentes,
- l'unité de détection (3) comprenant une disposition linéaire d'une pluralité d'antennes capacitives (3a) qui sont disposées, dans la direction d'extension principale de la moulure (1), derrière la moulure (1) les unes à côté des autres.

8. Dispositif selon l'une des revendications 1 à 5, comprenant en outre
- une unité d'affichage (4) avec une surface tactile et
- une barrière haptique (11) linéaire ou incurvée sur l'unité d'affichage (4) pour la délimitation d'une surface d'affichage (40) par rapport à la moulure (1),
- un segment, disposé au niveau de la moulure (1), de la surface tactile, formant l'unité de détection (3) du dispositif et
- un segment, disposé au niveau de la moulure (1), de l'unité d'affichage (4), formant la sortie de lumière (45) du dispositif.

9. Dispositif selon l'une des revendications précédentes, comprenant en outre des capteurs de proximité (7), l'unité d'analyse (5) étant conçue pour acquitter un geste détecté au moyen des capteurs de proximité (7) au moyen d'un signal lumineux émis à parti de la sortie de lumière (45).

10. Dispositif selon l'une des revendications précédentes, l'unité d'analyse (5) étant conçue pour analyser
- un premier geste sur la moulure (1) pour l'adaptation d'un volume sonore de la lecture d'un support et/ou
- un deuxième geste sur la moulure (1) pour l'adaptation d'un volume sonore d'une sortie vocale du système d'infotainment et/ou
- un troisième geste sur la moulure (1) pour l'adaptation d'un volume sonore de signaux acoustiques.

11. Dispositif selon la revendication 10, l'unité d'analyse (5) étant conçue pour acquitter un premier et/ou un deuxième geste et/ou un troisième geste analysé d'un utilisateur par une sortie optique d'un premier ou un deuxième ou un troisième texte d'information et/ou d'un symbole d'information sur une unité d'affichage (4).

12. Dispositif selon l'une des revendications précédentes, la moulure étant conçue pour distinguer des gestes de contact multiples et l'unité d'analyse (5) étant conçue
- pour acquitter un geste avec exactement un doigt avec un premier signal lumineux,
- pour acquitter un geste de contact multiple avec exactement deux doigts avec un deuxième signal lumineux et plus particulièrement
- pour acquitter un geste de contact multiple avec exactement trois doigts avec un troisième signal lumineux, qui est émis à partir de la sortie de lumière,
plus particulièrement, une position de l'émission du signal lumineux coïncidant avec le geste ou le geste de contact multiple correspondant.

13. Dispositif selon l'une des revendications précédentes, l'unité d'analyse (5) étant en outre conçue pour adapter, en réaction à l'écoulement d'une durée prédéfinie après la fin d'un geste détecté au moyen de l'unité d'analyse (3), un signal lumineux émis à partir de la sortie de lumière (45) à un réglage actuel de la lumière ambiante du moyen de transport (10).

14. Système d'infotainment comprenant un dispositif selon l'une des revendications précédentes.

15. Moyen de transport comprenant un système d'infotainment selon la revendication 14 ou un dispositif selon l'une des revendications précédentes 1 à 13.
